**Europäisches Patentamt**

**European Patent Office**

**Office européen des brevets**

(19)

(11) Numéro de publication : **0 187 094 B2**

(12) # NOUVEAU FASCICULE DE BREVET EUROPEEN

(45) Date de publication du nouveau fascicule du brevet : **13.05.92 Bulletin 92/20**

(51) Int. Cl.$^5$ : **G01N 27/90**

(21) Numéro de dépôt : **85402524.4**

(22) Date de dépôt : **18.12.85**

(54) **Méthode de contrôle par courants de foucault sans contact et dispositif de mise en oeuvre.**

(30) Priorité : **19.12.84 FR 8419409**

(43) Date de publication de la demande :
**09.07.86 Bulletin 86/28**

(45) Mention de la délivrance du brevet :
**26.10.88 Bulletin 88/43**

(45) Mention de la décision concernant
l'opposition :
**13.05.92 Bulletin 92/20**

(84) Etats contractants désignés :
**BE CH DE FR GB IT LI NL SE**

(56) Documents cités :
**DE-A- 3 324 444
GB-A- 2 082 330
US-A- 3 358 225
US-A- 3 496 458
PATENTS ABSTRACTS OF JAPAN, vol. 7, no.
23 (P-171) [1168], 29 janvier 1983**

(73) Titulaire : **SOCIETE NATIONALE D'ETUDE ET
DE CONSTRUCTION DE MOTEURS
D'AVIATION, "S.N.E.C.M.A."
2 Boulevard Victor
F-75015 Paris (FR)**

(72) Inventeur : **Lonchampt, Thierry
10, allée de Villemilan
F-92160 Antony (FR)**
Inventeur : **Mangenet, Gérard Yves
13, rue H. de Balzac Epinay sous Senart
F-91800 Brunoy (FR)**

(74) Mandataire : **Moinat, François
S.N.E.C.M.A. Service des Brevets Boîte
Postale 81
F-91003 Evry Cédex (FR)**

**EP 0 187 094 B2**

Jouve, 18, rue Saint-Denis, 75001 PARIS

## Description

L'invention se rapporte à une méthode et un dispositif pour le contrôle non destructif par Courants de Foucault.

On rapelle que le contrôle par Courants de Foucault consiste, par exemple, à alimenter une bobine montée sur une sonde, par un courant périodique de fréquence donnée, à présenter la sonde sur la pièce à contrôler et à analyser les variations d'impédance de la bobine causées par les courants de Foucault induits dans la pièce.

L'impédance est un vecteur à deux composantes l'une résistive, l'autre réactive. Les appareils de contrôle par courants de Foucault utilisant deux axes orthonormés quelconques ne permettent pas en général de connaître les deux axes résistif et réactif. Cependant les appareils courants comprennent un moyen de réglage du déphasage des composantes, il est ainsi possible de déplacer le repère par rotation, ils comprennent également un moyen de réglage par translation. Les composantes obtenues se déduisent donc des composantes résistive et réactive par simple changement de repère. Par la suite il ne sera question que de composante horizontale et de composante verticale de l'impédance.

Quand on visualise sur un oscilloscope la valeur de l'impédance d'une bobine d'une sonde de contrôle du type absolu, cette valeur est représentée par un point. Si on approche la sonde d'une pièce métallique ce point décrit une courbe que nous nommerons par la suite courbe de décollement. Cette courbe s'étend entre deux points extrêmes: un point représentatif de la valeur de l'impédance de la bobine dite « à l'air », c'est-à-dire quand celle-ci est suffisamment éloignée de la pièce pour ne pas subir son influence et un point représentatif de la valeur de l'impédance de la bobine quand la sonde est au contact de la pièce.

Pour des conditions opératoires données la longueur de ce segment de courbe ainsi que sa position autour du point « à l'air » vont être fonction de paramètres caractérisant la pièce et la position de la sonde.

Ainsi un entrefer entre la sonde et la pièce dû par exemple à la présence d'un revêtement non conducteur de l'électricité à la surface de la pièce ou bien à une couche d'air agit sur la longueur de la courbe en fonction de son épaisseur.

D'autres paramètres vont influer sur la position de la courbe; il s'agit par exemple de la perméabilité magnétique, de la conductivité, de la présence de criques ou de défauts dans la matière, de l'épaisseur de la pièce; pour ce dernier paramètre notamment son influence n'est mesurable que s'il est de l'ordre de grandeur de la profondeur de pénétration des courants de Foucault dans la pièce.

L'invention se propose d'utiliser les propriétés de cette courbe et a pour objet une méthode permettant de caractériser les pièces conductrices de l'électricité suivant des paramètres qui ont une influence sur la courbe de décollement. Elle pourra s'appliquer chaque fois que le contrôle est effectué par mesure ponctuelle sur la pièce et pourra être étendue aux méthodes de contrôle où l'on effectue un balayage de la surface de la pièce.

L'invention s'applique donc à:
– la mesure des épaisseurs de paroi de pièces en particulier pour des pièces creuses telles que les aubes de turbine de turbomachine pourvues de cavités internes pour la circulation de fluide réfrigérant et obtenues par fonderie de précision avec noyau céramique dissous après solidification de la pièce.
– la mesure des épaisseurs des revêtements conducteurs de l'électricité déposés à la surface des pièces.
– la mesure de l'espacement entre feuilles conductrices de l'électricité.
– le tri matière.
– le contrôle de traitement thermique.
– la recherche d'hétérogénéités de structure des matériaux.
– l'évaluation des évolutions structurales occasionnées par le fonctionnement des pièces.
– la détection de défauts (criques, manques de matière etc. . . . ).
Cette liste n'étant pas exhaustive.

Habituellement on réalise ce type de contrôle en amenant simplement la sonde au contact de la pièce et en exploitant la valeur de l'impédance en ce point par comparaison d'une des composantes avec une valeur de référence. Cette technique présente cependant de nombreux inconvénients. Les matériaux constituant la sonde sont fragiles, on constate une usure rapide et une détérioration de la bobine par les chocs répétés sur la pièce. La pression exercée à l'extrémité de la sonde peut entraîner des effets parasites qui faussent les mesures. La sonde chauffée par effet Joule est refroidie par échange thermique avec la pièce qui est à température ambiante, cette variation de température entraîne des effets parasites. Enfin le moindre défaut d'orthogonalité de l'axe de la sonde conduit à un effet d'entrefer agissant également sur l'impédance.

On peut atténuer certains de ces inconvénients en collant un ruban de matière synthétique à l'extrémité de la sonde pour la protéger ou bien en déplaçant la bobine légèrement en retrait dans une gaine ; mais on ne peut éviter alors une dispersion entre les sondes qui se traduit par de légères variations de la distance de la bobine à la pièce faussant les mesures et nécessitant au moins des étalonnages et des corrections délicates.

Le brevet DE 3 324 444 prévoit d'effectuer une mesure par courants de Foucault sans contact entre la pièce et la sonde en utilisant une sonde différentielle à deux bobines qui remplit une double fonction de mesure du décollement d'une part et de contrôle du défaut de la pièce d'autre part.

Ce dispositif permet de connaître à tout moment l'erreur de mesure du défaut due à la variation de décollement et utilise une unité de calcul complexe pour corriger en permanence cette erreur, lors du balayage de la pièce.

La présente invention vise également à effectuer un contrôle sans contact entre la sonde et la pièce, mais en utilisant une sonde de mesure à une seule bobine qui ne nécessite ni moyens de calcul de correction d'erreur ni sonde différentielle à double bobine.

Conformément à l'invention on remédie aux inconvénients précités en positionnant la sonde, au droit du point de mesure sur la pièce à une distance suffisante pour que ladite pièce n'ait aucune influence sur l'impédance de ladite sonde, puis on déplace la sonde en translation vers la pièce jusqu'à une distance de la surface correspondant à une valeur prédéterminée de la composante de l'impédance de la sonde dont l'évolution est la plus influencée par la distance sonde-pièce, notamment la composante de l'axe horizontal, et on effectue la mesure sur l'autre composante.

En effet, grâce à cette méthode on élimine tous les facteurs parasites liés au contact de la sonde avec la pièce et on obtient des résultats de grande fiabilité. De plus elle se prête aisément à une automatisation des mesures ce qui est d'un grand intérêt quand on veut réaliser des contrôles de pièces en cours de fabrication.

D'autres caractéristiques et avantages de l'invention sont développés dans la description qui suit où l'on se réfère à la mesure d'épaisseur de pièces en certains points et où :

La figure 1 représente un faisceau de courbes de décollement pour des pièces de différentes épaisseurs.

La figure 2 illustre le principe de la méthode selon l'invention.

La figure 3 donne une représentation schématique de l'appareillage selon l'invention.

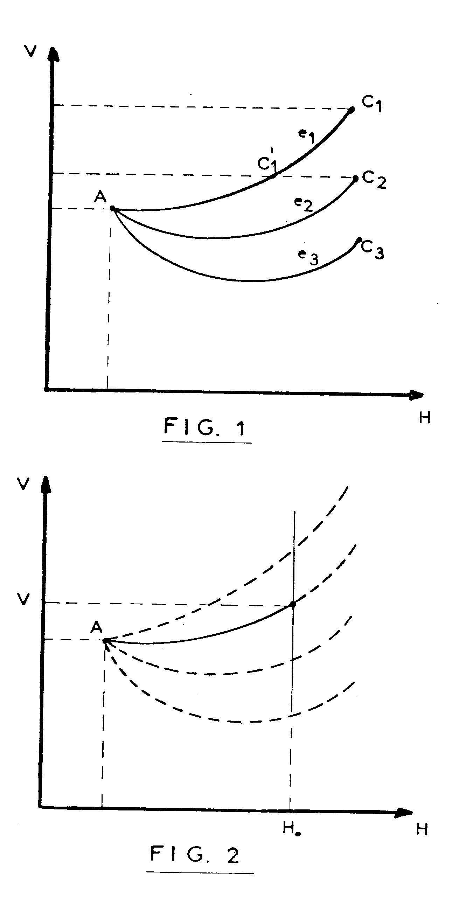

On a représenté à la figure 1 les courbes de décollement obtenues pour des pièces de trois épaisseurs différentes $e_1$, $e_2$, $e_3$, ces courbes convergent au point A qui correspond à la valeur de l'impédance de la bobine en position éloignée des pièces. On a réglé la phase de l'appareil de contrôle pour qu'elles présentent une orientation à peu près parallèle à l'axe horizontal. Quand on approche la sonde de la pièce d'épaisseur $e_1$ on se déplace de A vers $c_1$ qui est la valeur de l'impédance au point de contact ; pour des épaisseurs différentes $e_1$ $e_2$ $e_3$ on obtient les courbes $Ac_1$, $Ac_2$ et $Ac_3$.

En effectuant la mesure lorsque la sonde est au contact de la pièce, pour deux épaisseurs différentes on obtient bien deux valeurs différentes de la composante verticale de l'impédance à partir desquelles on peut déterminer les épaisseurs. Malheureusement si, par exemple pour la pièce $e_1$, la sonde vient à être légèrement inclinée par rapport à la surface on va effectuer le relevé au point $C'1$ et le résultat de la mesure donnera pour la pièce une épaisseur $e_2$ au lieu de $e_1$.

Une erreur du même type est possible quand on place la bobine en retrait dans une gaine concentrique à la sonde afin d'éliminer certains effets parasites dûs par exemple à la pression d'appui de la sonde sur la pièce. Quand au cours du contrôle d'un lot de pièces on remplace une première sonde où la bobine est en retrait d'une distance d1 dans sa gaine par une deuxième où la distance est d2, l'entrefer n'est plus le même. Si on ne tient pas compte de cet écart, pour une pièce d'épaisseur e1, la mesure donnera par exemple la valeur correspondant à $C'1$, soit $e_2$ au lieu de $e_1$.

La figure 2 montre le principe de la méthode selon l'invention; elle est illustrée dans une application à la mesure des épaisseurs d'un lot de pièces. En premier lieu on règle la phase de l'appareil de contrôle par courants de Foucault, (cet appareil ne présente en soi rien de particulier), de manière à obtenir sur l'oscilloscope un faisceau de courbes de décollement pour la gamme des épaisseurs concernées, approximativement parallèle à l'un des deux axes. Ce faisceau est représenté en traits interrompus il est orienté selon l'horizontale dans l'exemple choisi. On approche la sonde sensiblement normalement à la surface de la pièce au voisinage du point de mesure à une distance suffisante pour que sur l'écran le point représentatif de l'impédance soit en A. Ceci peut être réalisé en utilisant des moyens supports à mouvements automatiques préprogrammés. La sonde est ensuite entraînée dans un mouvement de translation en direction de la pièce jusqu'à ce que la composante horizontale H atteigne une valeur prédéterminée $H_o$. Le choix de cette première composante correspond à l'orientation sensiblement horizontale du faisceau. Cette valeur $H_o$ aura été choisie par un essai préalable, afin d'obtenir une valeur significative de la composante verticale pour les pièces concernées par la mesure.

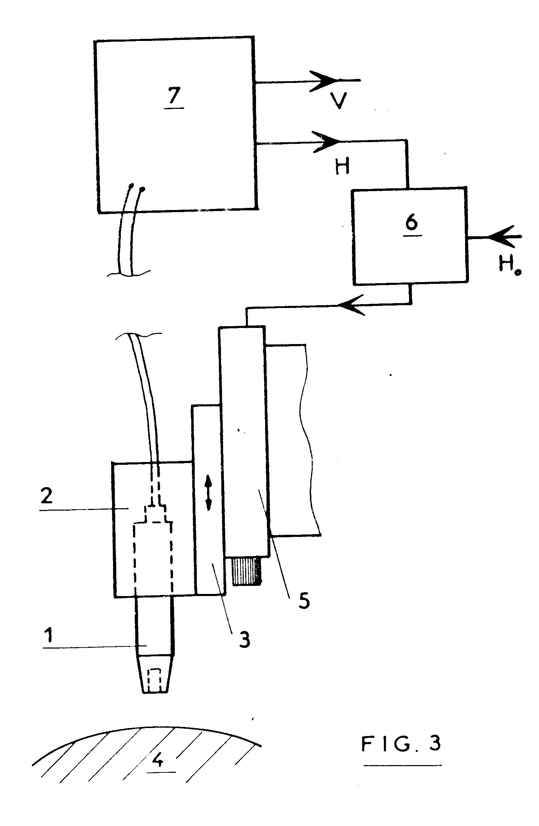

Cette valeur sera proche, mais hors, de l'intervalle dans lequel se situe l'ensemble des valeurs correspondant au contact de la sonde avec les pièces à contrôler. Le mouvement est arrêté pour $H = H_o$; la sonde est prête pour la mesure; il suffit de relever la valeur V de la deuxième composante, verticale, en ce point. A cette valeur correspond une épaisseur que l'on peut déterminer simplement par l'intermédiaire par exemple d'une courbe composante V - épaisseur préalablement établie. La figure 3 donne une représentation schématique d'un dispositif permettant la mise en oeuvre de la méthode.

La sonde 1 est montée sur un support 2 comportant un chariot 3 mobile en translation suivant une trajectoire normale à une pièce 4 à contrôler maintenue sur un socle. Les dispositifs de prépositionnement de la pièce par rapport à la sonde ne sont pas représentés sur le schéma car ils ne font pas partie de l'invention, ils peuvent être manuels ou automatiques avec des moyens d'entraînement programmés. Le chariot 3 est entraîné par un moteur 5 par exemple électrique, qui reçoit un signal de commande d'un système d'asservissement 6 connu en soi. Le boitier du système 6 comporte un moyen permettant d'afficher une valeur de référence $H_o$ et une entrée pour un signal H. Ce système a pour fonction de comparer H à $H_o$ et de commander l'alimentation du moteur jusqu'à ce que les deux valeurs deviennent égales. Le signal H correspond à l'une des composantes, par exemple horizontale, de l'impédance de la bobine, délivrée par l'appareil 7 de contrôle par courants de Foucault. Cet appareil 7 est lui aussi un appareil du commerce, il a pour fonction notamment d'alimenter la sonde, d'en analyser les variations d'impédance et de délivrer deux signaux H et V représentatifs de ses composantes.

L'invention ne se limite pas au mode de réalisation représenté; elle englobe tous les équivalents à la portée de l'homme de métier. Par exemple, on peut utiliser un autre système d'asservissement que celui décrit, on peut opérer manuellement; au lieu d'un mouvement continu, on peut déplacer la sonde par incréments, en particulier lorsqu'on utilise un système d'asservissement par ordinateur, jusqu'à obtenir la valeur prédéterminée de $H_o$. L'application ne se limite pas à la mesure des épaisseurs. Enfin, il est clair que les mesures peuvent être effectuées sur un nombre de points aussi élevé que l'on veut sur la même pièce.

## Revendications

1. Méthode de contrôle par courants de Foucault consistant à effectuer des mesures ponctuelles sur la surface de la pièce à contrôler et à produire deux signaux représentatifs des composantes de l'impédance de la sonde, au moyen d'un appareil de contrôle par courants de Foucault connu en soi que l'on a préalablement réglé de manière à obtenir en vue du calibrage un faisceau de courbes d'impédance fonction du décollement, ledit faisceau étant sensiblement parallèle à l'un des deux axes, par exemple l'axe horizontal H, caractérisée en ce qu'on prépositionne la sonde (1) au droit du point de mesure sur la pièce (4) à une distance suffisante pour que la pièce n'ait aucune influence sur l'impédance de ladite sonde puis on déplace la sonde en translation vers la pièce jusqu'à une distance de la surface correspondant à une valeur Ho prédéterminée de la composante de l'impédance de la sonde dont l'évolution est la plus influencée par la distance sonde-pièce, notamment la composante dudit axe horizontal H, et en ce qu'on effectue la mesure sur la deuxième composante.

2. Méthode selon la revendication 1 caractérisée en ce que la valeur Ho est choisie pour être proche mais hors de l'intervalle dans lequel se situe l'ensemble des valeurs correspondant au contact de la sonde avec les pièces à contrôler.

3. Dispositif pour la mise en oeuvre de la méthode selon l'une des revendications précédentes, comportant un appareil de contrôle (1) par courants de Foucault et un support pour maintenir en position la pièce à contrôler, caractérisé en ce qu'il comprend en outre :
   – un support (2) de sonde monté sur un chariot (3) mobile selon un axe perpendiculaire au plan tangent au point de mesure sur la pièce (4)
   – un moteur (5) d'entraînement dudit chariot
   – un système d'asservissement (6) pour produire un signal de commande du moteur (5) en fonction d'une valeur de référence Ho et d'un signal H provenant d'une des sorties dudit appareil (7) de contrôle par courants de Foucault représentatives de la variation d'impédance de la sonde.

## Patentansprüche

1. Wirbelstromprüfverfahren, bei dem mit Hilfe eines Wirbelstromprüfgeräts punktuelle Messungen an der Oberfläche des zu prüfenden Werkstücks vorgenommen und zwei für die Komponenten der Impedanz der Sonde kennzeichnende Signale erzeugt werden, wobei man zuvor das Prüfgerät zur Kalibrierung so eingestellt hat, daß man eine Schar von Kurven der Impedanz als Funktion der Ablösung erhält, wobei diese Kurvenschar im wesentlichen parallel zu einer der beiden Koordinatenachsen, z.B. der horizontalen Achse H, verläuft, dadurch gekennzeichnet, daß man die Sonde (1) in einem Abstand vom Ort des Meßpunkts an dem Werkstück (4) vorpositioniert, der hinreichend groß ist, so daß das Werkstück keinerlei Einfluß auf die Impedanz der Sonde hat, daß man dann die Sonde in einer Translationsbewegung in Richtung auf das Werkstück bis zu einem Abstand von der Oberfläche verschiebt, der einem vorbestimmten Wert $H_o$ derjenigen Komponente, insbesondere der in Richtung der genannten horizontalen Achse H verlaufenden Komponente der Impedanz der Sonde entspricht, deren Änderung durch den Abstand zwischen Sonde und Werkstück am meisten beeinflußt wird, und daß man die Messung an der zweiten Komponente vornimmt.

2. Verfahren nach Anspruch 1, dadurch gekennzeichnet, daß der Wert $H_o$ so gewählt ist, daß er in der Nähe, jedoch außerhalb des Intervalls liegt, in dem sich die Gesamtheit der Werte befindet, die der Berührung zwischen der Sonde und dem zu prüfenden Werkstück entsprechen.

3. Vorrichtung zur Durchführung des Verfahrens nach einem der vorhergehenden Ansprüche, mit einem Wirbelstromprüfgerät und einem Halter, um das zu prüfende Werkstück in Position zu halten, gekennzeichnet durch

    – einen Sondenhalter (2), der auf einem Schlitten (3) montiert ist, der längs einer zu der Tangentialebene im Meßpunkt an dem Werkstück (4) senkrechten Achse bewegbar ist,

    – einen Motor (5) zum Antrieb des Schlittens (3), und

    – ein Servosystem (6) zur Erzeugung eines Steuersignals für den Motor (5) in Abhängigkeit von einem Referenzwert $H_o$ und einem Signal H von einem der Ausgänge des Wirbelstromprüfgeräts (7), die für die Impedanzänderungen kennzeichnend sind.

**Claims**

1. Method of monitoring by eddy currents, consisting in making point measurements on the surface of the workpiece to be monitored and in producing two signals representing the components of the impedance of the probe, by means of an apparatus for monitoring by eddy currents which is known per se and has been regulated in advance so as to obtain, for the purposes of calibration, a set of curves of impedance as a function of the separation, the said set being substantially parallel to one of the two axes, for example the horizontal axis H, characterised in that the probe (1) is prepositioned in line with the point of measurement on the workpiece (4) at a sufficient distance for the workpiece not to have any influence on the impedance of the said probe, the probe is then displaced in translation towards the workpiece to a distance from the surface corresponding to a predetermined value Ho of the component of the impedance of the probe, the evolution of which is the most influenced by the probe-workpiece distance, in particular the component of the said horizontal axis H, and in that the measurement is carried out on the second component.

2. Method according to Claim 1, characterised in that the value Ho is chosen to be close to but outside the range which includes all the values corresponding to the contact of the probe with the workpieces to be monitored.

3. Device for carrying out the method according to one of the preceding claims, comprising an apparatus for monitoring (7) by eddy currents and a support to maintain in position the workpiece to be monitored, characterised in that it further comprises:

    – a probe support (2) mounted on a carriage (3) movable along an axis perpendicular to the tangent plane at the point of measurement on the workpiece (4)

    – a motor (5) to drive the said carriage

    – an automatic control system (6) to produce a signal to control the motor (5) as a function of a reference value Ho and of a signal H originating from one of the outputs of the said apparatus (7) for monitoring by eddy currents, which outputs are representative of the variation of impedance of the probe.

FIG. 1

FIG. 2

6

F I G. 3